# EUROPEAN PATENT APPLICATION

(11) **EP 2 234 448 A1**
(43) Date of publication of application: **29.09.2010**
(21) Application number: 09156447.6
(22) Date of filing: 27.03.2009
(51) Int. Cl.: H04W 76/00, H04L 29/08

(54) **Method and system for establishing and maintaining high speed radio access bearer for foreground application**

(71) Applicant: RESEARCH IN MOTION LIMITED, Waterloo, Ontario N2L 3W8 (CA)
(72) Inventor: Deu-Ngoc, Joseph, Waterloo Ontario N2L 5Z5 (CA); Wirtanen, Jeffrey, Kanata Ontario K2K 3K1 (CA); Gibbs, Fraser, Waterloo Ontario N2L 5Z5 (CA)
(74) Representative: Moore, Barry

(57) **Abstract**

A method and system for establishing and maintaining a high speed tunnel between a mobile device and a network, the method determining whether a foreground application on the mobile device requires the high speed tunnel, and if the foreground application requires the high speed tunnel, closing all tunnels from the mobile device to a network except the tunnel for the foreground application.

## Description

The present disclosure relates generally to radio bearers for mobile devices and in particular, to high-speed radio access bearers.

A mobile device requires the establishment of a radio access bearer in order to communicate with the wireless network infrastructure. Furthermore, some devices allow the establishment of a multiple radio access bearers for communication. In one instance, multiple radio access bearers can be dependent on the device requiring multiple packet data protocol (PDP) contexts. Thus, for example, a device may have a proprietary PDP context for the manufacturer of the device, a general wireless application protocol (WAP) context for browsing, a multi-media messaging service (MMS) PDP context for MMS applications, a streaming media PDP context for streaming media applications, among others. As will be appreciated, a PDP context is a term that is generally referred to in the third generation partnership project (3GPP) and more generally the term "tunnel" is used herein to refer to a data connection to a particular network.

The opening of multiple tunnels to a network can have disadvantages. For example, in the third generation partnership project high-speed downlink access (HSPDA), tunnels can be opened which have higher data transfer speeds and capacities. Current HSPDA deployments support downlink speeds of, for example, 1.8,3.6,7.2 or 14.4 Mbps.

While HSPDA networks and other high-speed networks may allow the establishment of multiple tunnels, in some instances only the first tunnel established is granted a high-speed radio access bearer. Any subsequent tunnel activation causes a downgrade of the radio access bearers to low-speed radio access bearers. This means that the high-speed radio access bearer is dropped for multiple low-speed radio access bearers. The dropping of a high-speed radio access bearer could result in degraded user experience.

### GENERAL

The present disclosure may provide a method for establishing and maintaining a high speed tunnel between a mobile device and a network, the method comprising: determining whether a foreground application on the mobile device requires the high speed tunnel, and if the foreground application requires the high speed tunnel, closing all tunnels from the mobile device to a network except the tunnel for the foreground application.

The present disclosure may further provide a mobile device configured to establish and maintain a high speed tunnel is open to a network, the mobile device comprising: a communications subsystem; and a processor, the processor configured to determine whether a foreground application on the mobile device requires the high speed tunnel, and if the foreground application requires the high speed tunnel, close all tunnels using the communications subsystem from the mobile device to a network except the tunnel for the high speed radio access bearer.

### BRIEF DESCRIPTION OF THE DRAWINGS

The present disclosure will be better understood with reference to the drawings in which:
**Figure 1** is a block diagram showing a process for prioritizing tunnels based on foreground applications;
**Figure 2A** is a block diagram illustrating a tunnel prioritization process for controlling active tunnels;
**Figure 2B** is a block diagram providing a continuation of the process of **Figure 2B****;**
**Figure 3** is a block diagram of an alternative embodiment the tunnel prioritization process of **Figure 2A** having a mobile device protection mode;
**Figure 4** is a block diagram of an alternative embodiment the tunnel prioritization process of **Figure 3** having a phone experience mode; and
**Figure 5** is a block diagram of an exemplary mobile device capable of being used with the methods of the present disclosure.

### DESCRIPTION OF PREFERRED EMBODIMENTS

As used herein, the following definitions apply:
a. Foreground application - refers to the application that a user currently sees on a display;
b. Background application - refers to any application that is not a foreground application;
c. Tunnel - refers to a data connection on a particular network; for 3GPP, this is a PDP context.
d. Opened Tunnel - refers to a tunnel that is active;
e. Closed Tunnel - refers to a tunnel that is not active;
f. Watermark - the number of tunnels that can be simultaneously be opened on a device. Also referred to as maximum tunnel count;
g. Focused tunnel - this is the highest priority tunnel and by default the tunnel that is opened first. For improved user experience, in one embodiment the focused tunnel is the tunnel used by the foreground application. An exception occurs when in a device protection mode;
h. A Device Tunnel - is a tunnel used for obtaining proprietary device services, such as, but not limited to, a proprietary push email service. In one embodiment it is the highest priority tunnel when there is no other focused tunnel and is the second highest priority tunnel when there is a focused tunnel. Therefore, if the watermark is greater then one, there will be one tunnel reserved for device services. The device tunnel, in one embodiment, is never the focused tunnel. Instead the focus is simply lost, meaning there is no focused tunnel, allowing the device to regain the device services. The device tunnel, when there is no focused tunnel, may become a high speed tunnel;
i. A Device Protection Mode - is a mode of operation that ensures a device tunnel is always available;
j. Application Solo Mode - is a mode of operation that attempts to ensure that an application requesting a tunnel obtains a high-speed tunnel. The application solo mode is associated with an application, and is therefore in turn associated with a tunnel.

In high-speed networks, the first radio access bearer guarantees that the first data connection is granted as a high-speed data connection. However, some networks implement further data connections to a mobile device in a way that causes the network to downgrade all active data connections for the device to a slower speed.

Aside from watermarking, which is a way to determine how many simultaneous data connections are allowed on a particular network, it would be useful for a mobile to know whether a particular data connection is high-speed. Unfortunately, there is no way for the mobile to know whether a network allows simultaneous high-speed data connections and only that the network is capable of high-speed data connections.

The present disclosure therefore provides for a way to ensure that an application in the foreground, which requires a high-speed tunnel, obtains the high speed tunnel by causing other tunnels to be deactivated to ensure the high-speed data tunnel is granted.

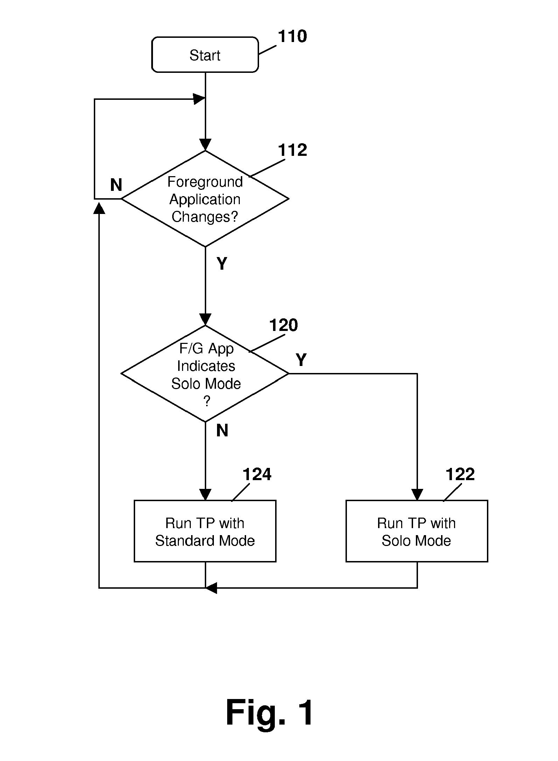

Reference is now made to **Figure 1****,** which illustrates a block diagram of a process for starting a tunnel prioritization process when focus changes on a user interface of the mobile device. **Figure 1** starts at block 110 and proceeds to block **112** in which a check is made to see if the foreground application changes. As will be appreciated by those in the art, the foreground application can change in various situations. For example, if a user first starts a device, the foreground application for the newly started device has changed. Other situations include starting a new application which then becomes the foreground application, minimizing a foreground application, quitting a foreground application, or changing the foreground application through a menu selection, among others.

If the foreground application has not changed, as determined in block **112,** the process continues to loop until the foreground application changes.

When the foreground application changes, as determined in block **112,** the process proceeds to block **120** in which a check is made to determine whether the foreground application has a flag to indicate an application solo mode. As indicated above, an application solo mode is a mode of operation that attempts to ensure that the requesting application obtains a high-speed tunnel. The application solo mode is controlled, in one embodiment, by a flag set by the application using the tunnel. The ultimate decision on which applications should be allowed have a flag for the application solo mode is, in one embodiment, the responsibility of the application executive. For example, this could be the operating system or virtual machine that is running the application.

In the present disclosure, when a tunnel is associated with an application requiring an application solo mode, the tunnel is marked as an application solo mode tunnel, in one embodiment it is required that the tunnel is also a focused tunnel for the application solo mode behavior to take effect. Here, the rationale is that if an application has a requirement for an application solo mode tunnel, then the application is displayed in the foreground. If the user is not using that application and the application is in the background then the requirement for high-speed is less and other tunnels may be opened to provide the services required on the mobile device.

The check in block **120** determines whether or not the foreground application has a flag to indicate an application solo mode. If yes, the process proceeds to block **122** in which a tunnel priority process is run indicating that an application solo mode should be active. Conversely, if the application does not indicate application solo mode, the process proceeds to block **124** in which a tunnel prioritization process is run with a standard mode of operation.

From blocks **122** and **124,** the process proceeds back to block **112** to check whether or not the foreground application has changed.

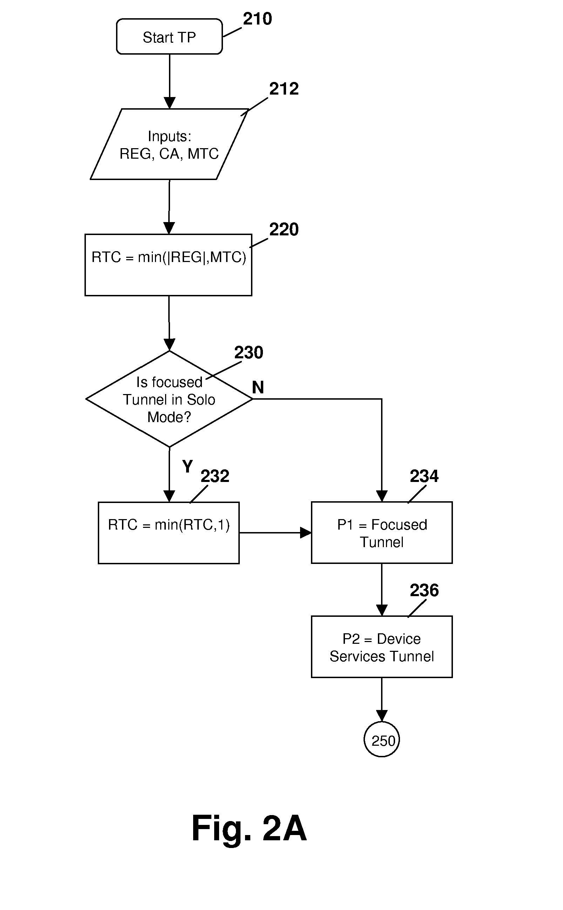

The tunnel prioritization process, and variants thereof, are described herein with reference to **Figures 2A****,** **2B****,** **3** and **4****.** The process can be started in by occurrence of various events, including the change in foreground application, as described with reference to **Figure 1****,** but also whenever a tunnel is activated or deactivated, a tunnel is requested, and the watermark changes. In each case the process starts at block **210.**

Reference is now made to **Figure 2A. Figure 2A** shows that the tunnel prioritization process that is started at block **210** and has inputs as shown in block **212.**
In particular, the inputs required for the process of **Figure 2A** include a set of currently registered tunnels (REG), which is an indication of all the possible tunnels that are registered and could be activated. Examples include a device tunnel (t_{dev}), a WAP tunnel (t_{WAP}), an MMS tunnel (t_{MMS}) and a streaming media tunnel (t_{steaming}), among others. Thus, if the device has four tunnels registered, the input REG consists of a set comprising four tunnels.

A second input provided to the process of **Figure 2A** is a set of currently active tunnels (CA). The input CA provides a set of tunnels that have been opened for the mobile device.

A third input is the watermark or maximum tunnel count (MTC), which provides an indication as to how many tunnels can be opened on the particular network that the mobile device is registered with.

The process proceeds to block **220** in which the required tunnel count (RTC) is set. As will be appreciated by those in the art, the number of tunnels that should be opened should be no greater then the number of tunnels registered or the watermark amount. In other words, the required tunnel count is the minimum of the number of registered tunnels and the watermark count. As used in block **220,** and in the remainder of the figures, the operator pair "I" as used in IREGI defines the size of the set "REG" or the number of elements in the set "REG".

From block **220,** the process then proceeds to block **230,** in which a check is made to determine whether the focused tunnel is in application solo mode. As used herein, the focused tunnel is the tunnel for the foreground application and the application solo mode is determined in block **120** of **Figure 1****.**

If the focused tunnel is in application solo mode, the process proceeds to block **232** in which the required tunnel count is set to have the maximum number of one, thus ensuring that only one tunnel can be opened.

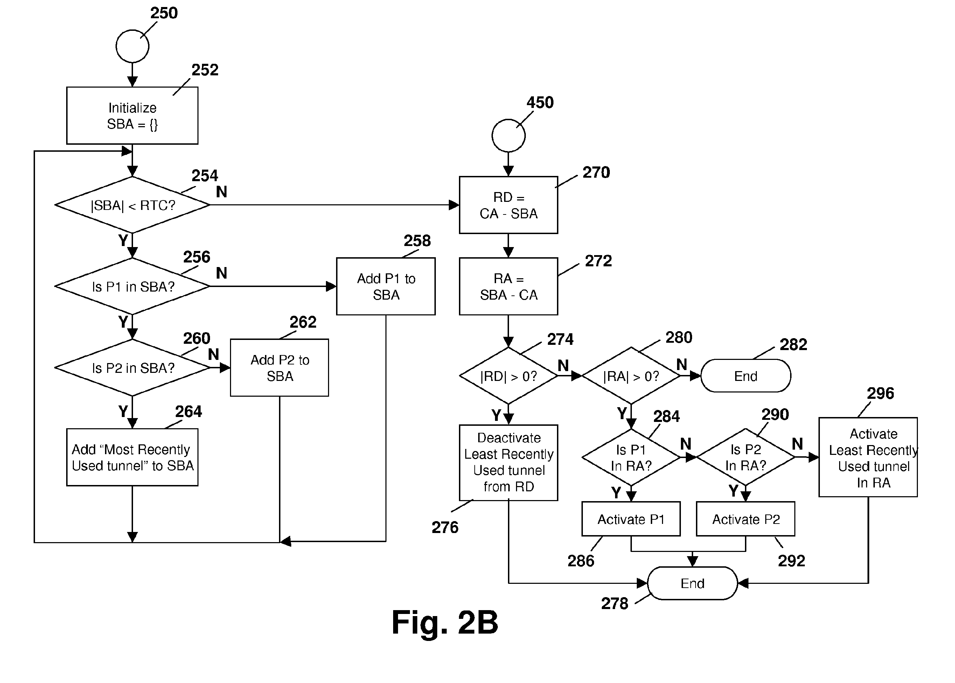

If the focused tunnel is not in application solo mode, or after block **232,** the process proceeds to block **234.** In block **234,** the highest priority tunnel denoted as P1 in **Figure 2** is set to be the focused tunnel.

From block **234** the process proceeds to block **236** in which the second highest priority tunnel is set. In one embodiment, the second highest priority tunnel denoted as P2 can be set to include the device tunnel. However, in other embodiments different tunnels can be set to the second highest priority.

The process then proceeds to entry point **250** of **Figure 2B****.** Reference is now made to **Figure 2B****.**

From entry point **250,** the process proceeds to block **252** where, in the first pass through the tunnel prioritization process, the "should be active" set of tunnels (SBA) is set to be an empty set. As used in block **252,** SBA is a set and the operator "fl" indicates an empty set.

The process then proceeds to block **254** in which the number of tunnels that should be active is checked against the required tunnel count. If the number of tunnels that should be active is less then the required tunnel count the process proceeds to block **256** in which a check is determine whether the highest priority tunnel is within the group of tunnels that should be active. If no, the process proceeds to block **258** in which the highest priority tunnel is added to the group of tunnels that should be active and the process proceeds back to block **254.**

If the check in block **256**determines that the highest priority tunnel is within the group of tunnels that should be active, the process proceeds to block **260** in which a check is made to determine whether the second highest priority tunnel is within the group of tunnels that should be active. If no, the process proceeds to block **262** and adds the second highest priority tunnel to the group of tunnels that should be active and the process proceeds back to block **254.** Conversely, from block **260** if the second highest priority tunnel is within the group of tunnels that should be active, the process proceeds to block **264** in which the most recently used tunnel is added to the set of tunnels that should be active and the process proceeds back to block **254.**

From block **254,** if the number of tunnels within the set of tunnels that should be active is not less then the required tunnel count, the process then proceeds to block **270,** in block **270** a determination is made to determine the set of tunnels which require deactivation (RD). In particular, the tunnels that require deactivation are the currently active tunnels that are not part of the SBA set. As used in block **270** and **272,** the "-" operator indicates the elements in the set preceding the operator but not in the set following the operator. Thus, in block **270,** the expression "CA-SBA" indicates the elements in the set CA but not in the set SBA.

The process then proceeds to block **272** in which the set of tunnels that require activation (RA) are determined. In particular, the tunnels that require activation are those within the SBA set that are not currently active.

The process then proceeds to block **274** in which it is determined whether or not the set of tunnels requiring deactivation is greater then zero. If yes, then process proceeds to block **276** and deactivates the least recently used tunnel from the recently used tunnels that require deactivation and the process then proceeds to block **278** and ends. As will be appreciated, the deactivation of the tunnel causes the tunnel prioritization process to be restarted, in effect ensuring that all tunnels requiring activation and deactivation are processed. In an alternative embodiment the process could loop from block **276** back to block **274.**

If the check in block **274** determines that there are no tunnels to be deactivated, the process proceeds to block **280** in which a determination is made to identify whether there are any tunnels that require activation. If not, the process proceeds to block **282** and ends.

Conversely, if it is determined in block **280** that tunnels require activation the process proceeds to block **284** in which a check is made to determine whether or not the highest priority tunnel is within the set of tunnels that need activation. If yes, the process proceeds to block **286** where the highest priority tunnel is activated and the process then proceeds to block **278** and ends. Again, the activation of a tunnel causes the tunnel prioritization process to be started again. Alternatively, the process could loop from block **286** to block **280.**

From block **284,** if the highest priority tunnel is already activated the process then proceeds to block **290** in which a check is made to determine whether the second highest priority tunnel is activated (i.e. P2 is not in the set of tunnels that require activation). If not the process proceeds to block **292** in which the second highest priority tunnel is activated and the process proceeds to block **278** and ends.

Conversely, if from block **290** it is determined that the second highest priority tunnel is not in the set of tunnels requiring activation then the process proceeds to block **296** in which the most recently used tunnel in the tunnels requiring activation is activated and the process proceeds to block **278** and ends.

The use of **Figures 1****,** **2A** and **2B** is illustrated with regard to two examples below. In both examples, the device includes a proprietary service/application that requires an activation of a tunnel for the device. The device is in a network that supports multiple tunnels. In the examples, it is preferred that multiple tunnels are active unless a high-speed connection needs to be made.

### Example A - WAP browser requiring application solo mode.

In order to ensure optimal performance for a user that is browsing the Internet over a carrier's wireless application protocol (WAP) browser, the WAP browser may be provided with a flag indicating that it prefers application solo mode.

At the outset, the mobile may be operating with a tunnel for the device services and with no other tunnel open. Thereafter, the user opens the WAP browser in the foreground, and the process starts in **Figure 1** by proceeding to block **112** determining that a foreground change has occurred. In this case, the process then proceeds to block **120** and determines that the WAP browser does in fact require application solo mode and therefore the process proceeds to block **122** in which the tunnel prioritization process is run indicating an application solo mode.

Referring to **Figure 2A** the set of registered tunnels (REG) could include multiple tunnels and among them the device service tunnel as well as the WAP tunnel. The currently active tunnel for block **212** is the device service tunnel. Further, a watermark is provided, for example that the network service allows three tunnels to be opened.

In block **220** the required tunnel count is set to the minimum of size of the set of registered tunnels and the watermark. In this case, the required tunnel count could be set to three which is the watermark number, assuming the number of registered tunnels in the set of registered tunnels is equal to or greater than three.

The process then proceeds to block **230** in which a check is made to determine whether the mobile device is in application solo mode. In present example, the application on the mobile device is in application solo mode and the process then proceeds to block **232** in which the required tunnel count RTC is forced to one.

The process then proceeds to block **234** in which the highest priority tunnel is set is set to the WAP tunnel and to block **236** in which the second highest priority tunnel is set to the device tunnel.

The process then proceeds to block **252** in which the set of tunnels that should be active is initialized to an empty set and the process then proceeds to block **254** in which the number of tunnels in the set of tunnels that should be active is compared to the required tunnel count. In this case, since the SBA set was initialized, the count is zero, which is less than the RTC of one. In this regard, the process proceeds to block **256** in which a check is made to determine whether the highest priority tunnel is within the set of tunnels that should be active. Since it is not, the process proceeds to block **258** in which the highest priority tunnel is added to the set of tunnels that should be active and the process proceeds back to block **254.**

At block **254** a check is again made to determine whether the number of tunnels within the set of tunnels that should be active is less then the required tunnel count. In this case, both are one and therefore the check at block **254** is false and the process proceeds to block **270** in which required deactivation indicates that the currently active device tunnel should be deactivated. Further, the process proceeds to block **272** in which the set of tunnels that require activation is incremented to include the highest priority tunnel.

The process then proceeds to block **274** in which it is determined that there are tunnels that need deactivation and the process proceeds to block **276** in which the recently used tunnel is deactivated. In this case, the process deactivates the device tunnel.

The process ends at block **278.** However, the deactivation of a tunnel causes the process to start again at block **210.** In this case the input includes set CA having no active tunnels. The process steps though as above, and in block **270** the set of tunnels requiring deactivation is now empty. The set of tunnels requiring activation in block **272** is set to the highest priority tunnel.

The process then proceeds to block **280** in which it determines whether or not a tunnel needs to be activated. Since the highest priority tunnel needs to be activated the process proceeds to block **284** in which the highest priority tunnel is found not to be activated. The process then proceeds to block **286** and the highest priority tunnel is activated. The process then ends at block **278.** The activation causes the tunnel prioritization process to run again, but this time both RD in block **270** and RA in block **272** are empty, causing the process to end at block **282.**

As seen from the above, only the high priority tunnel is activated and the remainder deactivated tunnels are closed on starting a WAP browser or bring the WAP browser to the foreground.

If the WAP browser is closed or put into the background, this will cause the tunnel prioritization process to run again.

### Example B - starting a non-application solo mode application.

In a further example, the WAP browser that is started has been flagged to be a non-application solo mode application. Again, the preconditions in this case are that a devices services tunnel is already opened and no other tunnel is opened.

Referring to **Figure 1****,** the process starts at block **110** and determines that the WAP browser has been opened in block **112.** The process then proceeds to block **120** to determine whether the application indicates application solo mode. In this case, the application does not indicate application solo mode, so the process proceeds to block **124** in which the tunnel prioritization process is run using standard mode.

Referring to **Figure 2A****,** the tunnel prioritization process starts at block **210** and proceeds to block **212** in which the one of the inputs is the set of registered tunnels. This could be a set of tunnels, which for example has three or four tunnels that are registered for the device. The set of currently active tunnels includes the device tunnel and the watermark again in this case is three.

The process then proceeds to block **220** in which the required tunnel count is set to the minimum of the number of registered tunnels with the set of registered tunnels and the watermark; in this case the required tunnel count is set to three.

The process then proceeds to block **230** in which a check is made to determine whether the focused tunnel is in application solo mode. Since it is not, the process proceeds to block **234** in which the focused tunnel is set to be the highest priority tunnel and the device tunnel is set to be the second highest priority tunnel in block **236.**

The process then proceeds to block **252** in which the set of tunnels that should be active is initialized and the process proceeds to block **254** in which a determination is made to determine whether the set of tunnels that should be active is less then the required tunnel count. In this case, the required tunnel count is three and therefore the check at block **254** is true and the process proceeds to block **256.** From block **256** the highest priority tunnel needs to be added to the set of tunnels that should be active and the process proceeds to block **258** in which the highest priority tunnel is added and the process then loops back to block **254.**

In this case, the check at block **254** determines that there is one tunnel within the set of tunnels that should be active which is still less then the required tunnel count and the process proceeds to block **256.** Here, the highest priority tunnel is already in the set of tunnels that should be active and the process then proceeds to block **260** in which a determination is made to determine whether the second highest priority tunnel is within the set of tunnels that should be active. Since it is not, the process proceeds to block **262** and adds the second priority tunnel to the set of tunnels that should be active and the process loops back to block **254.**

A check is made to determine whether the number of tunnels within the set that should be active is less then the required tunnel count. In this case, there are two tunnels within the set that should be active which is still less then the required tunnel count and the process then proceeds to block **256,** block **260** and block **262** in which the most recently used tunnel is added to the set of tunnels that should be active.

The process then proceeds back to block **254,** where there are now three tunnels in the set that should be active, which is not less then the required tunnel count. The process then proceeds to block **270** in which the set of tunnels which require deactivation are found to have no tunnels. The process then proceeds to block **272** in which the set of tunnels that require activation are found to be the highest priority tunnel and the most recently used tunnel.

The process then proceeds to block **274** in which the determination is made that there are no tunnels that need deactivation. The process then proceeds to block **280** in which it is determined there are tunnels that need activation. The process then proceeds to block **284** in which the highest priority tunnel is determined to require activation. In this case, the process proceeds to block **286** in which the highest priority tunnel is activated and the process ends at block **278.** The activation of a tunnel causes the tunnel prioritization process to run again, at which point the most recently used tunnel is next started.

The embodiment of Figures **1****,** **2A** and **2B** provide for the closing of tunnels in the case where an application has been flagged for application solo mode to ensure only one tunnel is active. This in turn ensures that a high speed radio access bearer is maintained for the application solo mode, thereby creating a better user experience.

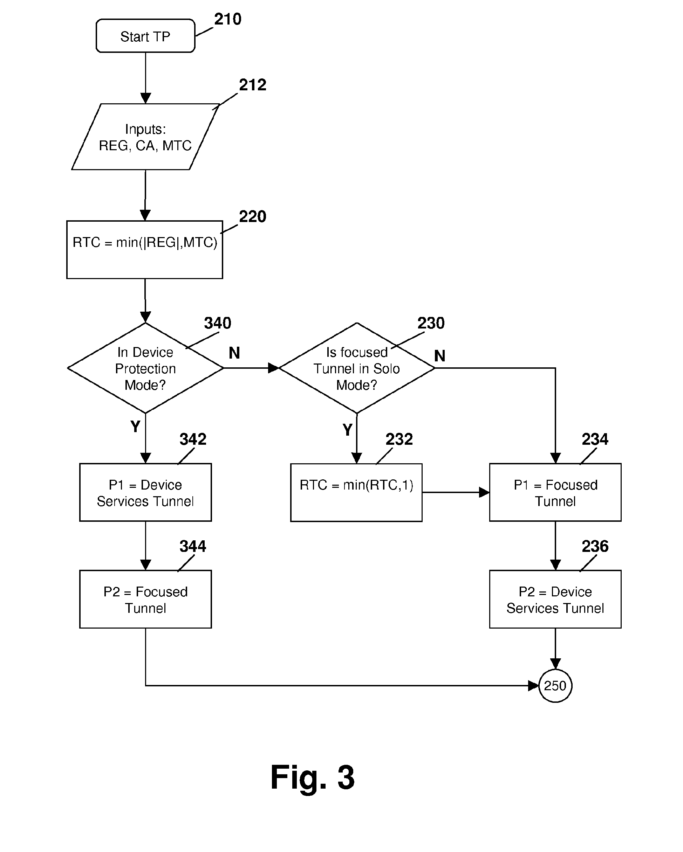

Reference is now made to **Figure 3****.** In certain instances, a "protection mode" is desirable to ensure the device tunnel is given priority. In the case of "protection mode", the order priority from highest to lowest is the device tunnel, the focused tunnel, and an ordered list of most recently used tunnels. This contrasts with the device protection mode being disabled where the order priority would be, as described above, the focused tunnel, the device tunnel and an ordered list of most recently used tunnels.

In order to facilitate protection modes, the process diagram of **Figure 2A** has been modified. Where applicable, like reference numerals have been used.

Referring to **Figure 3****,** the process for the tunnel prioritization process starts at block **210** and proceeds to block **212,** providing inputs containing the set of registered tunnels, set of currently active tunnels and watermark. The process then proceeds to block **220** where the required tunnel count is set to be equal to the minimum of the number of registered tunnels within the set of registered tunnels and the watermark.

Instead of proceeding from block **220** to block **230** as in **Figure 2A****,** the process of Figure 3 proceeds to block **340.** In block **340** a check is made to determine whether the device is in protection mode. If not, the process proceeds to block **230** and continues as described above with reference to **Figure 2A****.**

Conversely, if it is determined in block **340** that the device is in protection mode, the process proceeds to block **342** in which the highest priority tunnel is set to be the device tunnel.

The process then proceeds to block **344** in which the second highest priority tunnel is set to be the focused tunnel.

From block **344,** the process proceeds to connection point **250** in **Figure 2B** and the process continues as described above with reference to **Figure 2B****.**

As will be appreciated, by setting the highest priority to the data services tunnel the data services tunnel is then established first.

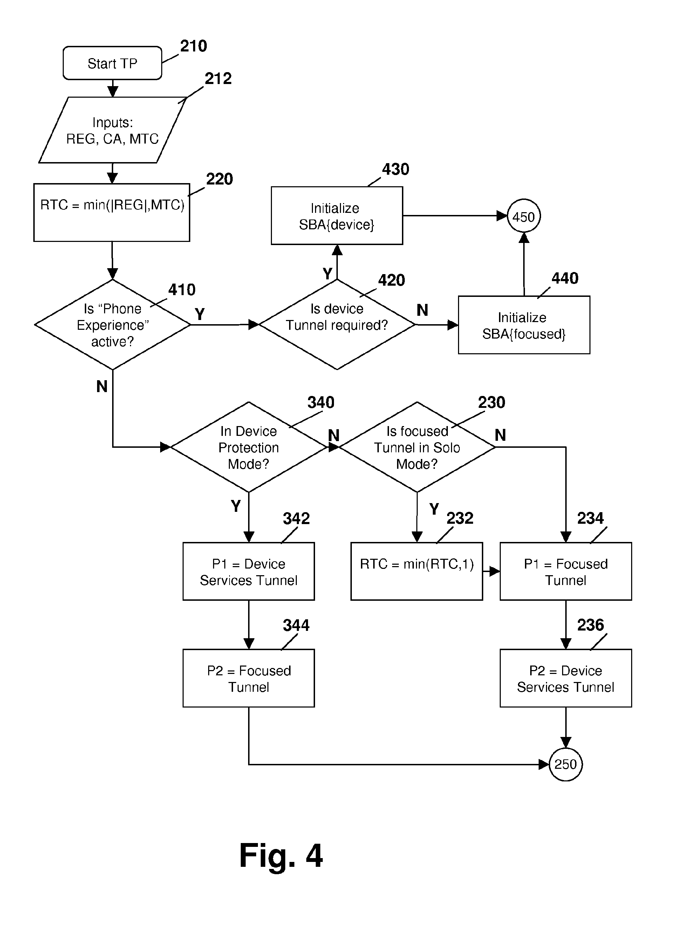

In a further alternative embodiment, preferences maybe designated for the tunnels that should be enabled during a circuit switched call. Reference is now made to **Figure 4****.**

**Figure 4** illustrates the example when the "phone experience" requires that certain tunnels be enabled during a circuit switched call. The process of **Figure 4** is similar to that of **Figure 3** and similar reference numerals have been used for like elements.

The process of **Figure 4** starts at the tunnel prioritization process of block **210** and proceeds to block **212,** in which inputs REG, CA and MTC are provided. These correspond with the set of registered tunnels, the set of currently active tunnels and the current watermark.

In block **220** the required tunnel count is set to be the minimum of number of registered tunnels in the set of registered tunnels and the watermark.

From block **220** the process proceeds to block **410** instead of block **340,** as in **Figure 3****.** In block **410** a check is made to determine whether the "phone experience" is active. As will be appreciated, this step determines whether specific tunnels should be enabled on a circuit switched call.

If the phone experience is not active, as found in block **410** the process proceeds to block **340** and proceeds in accordance with **Figure 3** above.

Conversely, if it is found in block **410** that the phone experience is active, the process proceeds to block **420** in which a check is made to determine whether a device tunnel is required for circuit switched calls. If yes, the process proceeds to block **430** in which the set of tunnels that should be active is initialized to have the device tunnel as part of the tunnels that should be active.

Conversely, if a device tunnel is not required then the process proceeds to block **440** in which the set of tunnels that should be active is initialized to include the focused tunnel as part of the set.

From block **430** or block **440** the process proceeds to entry point **450** of **Figure 2B** and proceeds in accordance with the remaining blocks of **Figure 2B** as described above.

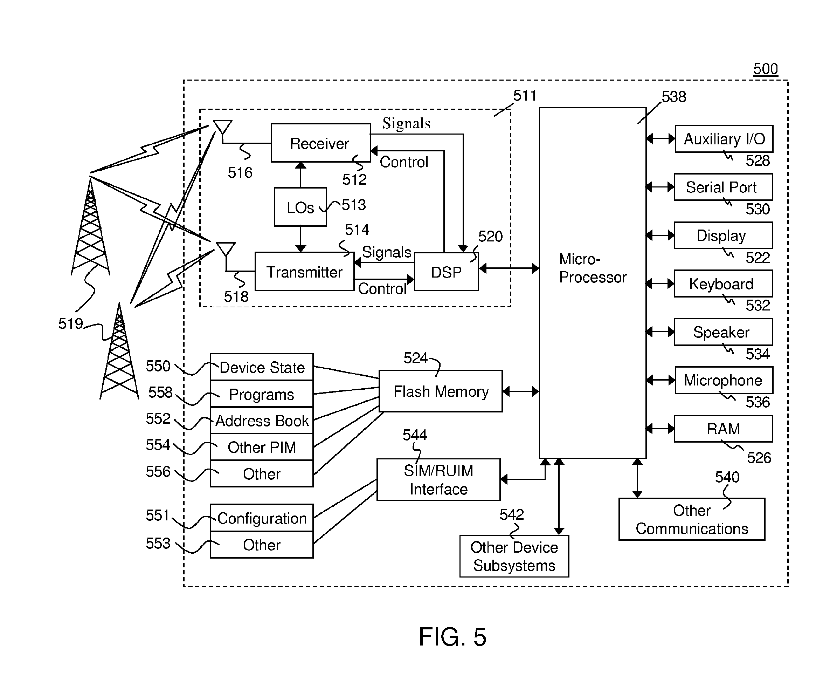

As will be appreciated, the checking of radio access bearers and establishing radio access bearers is done utilizing the processor on a mobile device, in combination with a communications subsystem of the mobile device. One such exemplary mobile device is illustrated below with reference to **Figure 5****.** The mobile device with reference to **Figure 5** is however not meant to be limiting and other mobile devices could also be used.

Mobile device **500** is preferably a two-way wireless communication device having at least voice and data communication capabilities. Mobile device **500** preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile device **500** is enabled for two-way communication, it will incorporate a communication subsystem **511,** including both a receiver **512** and a transmitter **514,** as well as associated components such as one or more, preferably embedded or internal, antenna elements **516** and **518,** local oscillators (LOs) **513,** and a processing module such as a digital signal processor (DSP) **520.** As will be apparent to those skilled in the field of communications, the particular design of the communication subsystem **511** will be dependent upon the communication network in which the device is intended to operate.

Network access requirements will also vary depending upon the type of network **519.** In some CDMA networks network access is associated with a subscriber or user of mobile device **500.** A CDMA mobile device may require a removable user identity module (RUIM) or a subscriber identity module (SIM) card in order to operate on a CDMA network. The SIM/RUIM interface **544** is normally similar to a card-slot into which a SIM/RUIM card can be inserted and ejected like a diskette or PCMCIA card. The SIM/RUIM card can have memory and hold many key configuration 551, and other information **553** such as identification, and subscriber related information.

When required network registration or activation procedures have been completed, mobile device **500** may send and receive communication signals over the network **519.** As illustrated in **Figure 5****,** network **519** can consist of multiple base stations communicating with the mobile device. For example, in a hybrid CDMA 1x EVDO system, a CDMA base station and an EVDO base station communicate with the mobile station and the mobile device is connected to both simultaneously. The EVDO and CDMA 1x base stations use different paging slots to communicate with the mobile device.

Signals received by antenna **516** through communication network **519** are input to receiver **512,** which may perform such common receiver functions as signal amplification, frequency down conversion, filtering, channel selection and the like, and in the example system shown in **Figure 5****,** analog to digital (A/D) conversion. A/D conversion of a received signal allows more complex communication functions such as demodulation and decoding to be performed in the DSP **520.** In a similar manner, signals to be transmitted are processed, including modulation and encoding for example, by DSP **520** and input to transmitter **514** for digital to analog conversion, frequency up conversion, filtering, amplification and transmission over the communication network **519** via antenna **518.** DSP **520** not only processes communication signals, but also provides for receiver and transmitter control. For example, the gains applied to communication signals in receiver **512** and transmitter **514** may be adaptively controlled through automatic gain control algorithms implemented in DSP **520.**

Mobile device **500** preferably includes a microprocessor **538** which controls the overall operation of the device. Communication functions, including at least data and voice communications, are performed through communication subsystem **511.** Microprocessor **538** also interacts with further device subsystems such as the display **522,** flash memory **524,** random access memory (RAM) **526,** auxiliary input/output (I/O) subsystems **528,** serial port **530,** one or more keyboards or keypads **532,** speaker **534,** microphone **536,** other communication subsystem **540** such as a short-range communications subsystem and any other device subsystems generally designated as **542.** Serial port **530** could include a USB port or other port known to those in the art.

Some of the subsystems shown in **Figure 5** perform communication-related functions, whereas other subsystems may provide "resident" or on-device functions. Notably, some subsystems, such as keyboard **532** and display **522,** for example, may be used for both communication-related functions, such as entering a text message for transmission over a communication network, and device-resident functions such as a calculator or task list.

Operating system software used by the microprocessor **538** is preferably stored in a persistent store such as flash memory **524,** which may instead be a read-only memory (ROM) or similar storage element (not shown). Those skilled in the art will appreciate that the operating system, specific device applications, or parts thereof, may be temporarily loaded into a volatile memory such as RAM **526.** Received communication signals may also be stored in RAM **526.**

As shown, flash memory **524** can be segregated into different areas for both computer programs **558** and program data storage **550, 552, 554** and **556.** These different storage types indicate that each program can allocate a portion of flash memory **524** for their own data storage requirements. Microprocessor **538,** in addition to its operating system functions, preferably enables execution of software applications on the mobile device. A predetermined set of applications that control basic operations, including at least data and voice communication applications for example, will normally be installed on mobile device **500** during manufacturing. Other applications could be installed subsequently or dynamically.

One software application may be a personal information manager (PIM) application having the ability to organize and manage data items relating to the user of the mobile device such as, but not limited to, e-mail, calendar events, voice mails, appointments, and task items. Naturally, one or more memory stores would be available on the mobile device to facilitate storage of PIM data items. Such PIM application would preferably have the ability to send and receive data items, via the wireless network **519.**
In a preferred embodiment, the PIM data items are seamlessly integrated, synchronized and updated, via the wireless network **519,** with the mobile device user's corresponding data items stored or associated with a host computer system. Further applications may also be loaded onto the mobile device **500** through the network **519,** an auxiliary I/O subsystem **528,** serial port **530,** short-range communications subsystem **540** or any other suitable subsystem **542,** and installed by a user in the RAM **526** or preferably a nonvolatile store (not shown) for execution by the microprocessor **538.** Such flexibility in application installation increases the functionality of the device and may provide enhanced on-device functions, communication-related functions, or both. For example, secure communication applications may enable electronic commerce functions and other such financial transactions to be performed using the mobile device **500.**

In a data communication mode, a received signal such as a text message or web page download will be processed by the communication subsystem **511** and input to the microprocessor **538,** which preferably further processes the received signal for output to the display **522,** or alternatively to an auxiliary I/O device **528.**

A user of mobile device **500** may also compose data items such as email messages for example, using the keyboard **532,** which is preferably a complete alphanumeric keyboard or telephone-type keypad, in conjunction with the display **522** and possibly an auxiliary I/O device **528.** Such composed items may then be transmitted over a communication network through the communication subsystem **511.**

For voice communications, overall operation of mobile device **500** is similar, except that received signals would preferably be output to a speaker **534** and signals for transmission would be generated by a microphone **536.** Alternative voice or audio I/O subsystems, such as a voice message recording subsystem, may also be implemented on mobile device **500.** Although voice or audio signal output is preferably accomplished primarily through the speaker **534,** display **522** may also be used to provide an indication of the identity of a calling party, the duration of a voice call, or other voice call related information for example.

Serial port **530** in **Figure 5** would normally be implemented in a personal digital assistant (PDA)-type mobile device for which synchronization with a user's desktop computer (not shown) may be desirable, but is an optional device component. Such a port **530** would enable a user to set preferences through an external device or software application and would extend the capabilities of mobile device **500** by providing for information or software downloads to mobile device **500** other than through a wireless communication network. The alternate download path may for example be used to load an encryption key onto the device through a direct and thus reliable and trusted connection to thereby enable secure device communication. As will be appreciated by those skilled in the art, serial port **530** can further be used to connect the mobile device to a computer to act as a modem.

Other communications subsystems **540,** such as a short-range communications subsystem, is a further optional component which may provide for communication between mobile device **500** and different systems or devices, which need not necessarily be similar devices. For example, the subsystem **540** may include an infrared device and associated circuits and components or a Bluetooth™ communication module to provide for communication with similarly enabled systems and devices.

While the above examples utilize HSDPA networks, the solution is equally applicable to other networks, which include but are not limited to Universal Mobile Telecommunications System (UMTS) networks, Global System for Mobile telephony (GSM) networks, Long Term Evolution (LTE) networks, among others. For example, in UMTS, the channels are cumulative and the data must therefore be shared between the channels.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method for establishing and maintaining a high speed tunnel between a mobile device and a network, the method comprising:
determining whether a foreground application on the mobile device requires the high speed tunnel, and
if the foreground application requires the high speed tunnel, closing all tunnels from the mobile device to a network except the tunnel for the foreground application.

2. The method of claim 1, wherein the tunnel is associated with a packet data protocol context.

3. The method of claim 2, wherein the packet data protocol context is associated with a radio access bearer.

4. The method of claim 3, wherein the high speed tunnel utilizes high speed downlink packet access.

5. The method of any one of claims 1 to 4, wherein the closing all tunnels utilizes a tunnel prioritization process comprising:
forcing a required tunnel count to be set to one;
setting the highest priority tunnel to be a tunnel for the foreground application;
designating a set of tunnels that should be opened to be the highest priority tunnel; and
deactivating tunnels currently active not in the set of tunnels that should be opened.

6. The method of any one of claims 1 to 5, further comprising:
restoring tunnels if the foreground application does not require the high speed tunnel.

7. The method of claim 6, wherein the restoring comprises:
assigning a required tunnel count to be a minimum of a watermark value and a number or registered tunnels;
designating a set of tunnels that should be opened to a prioritized list of tunnels having a size equal to the required tunnel count;
deactivating tunnels currently active and not in the set of tunnels that should be opened; and
activating tunnels not currently active but in the set of tunnels that should be opened.

8. The method of any one of claims 1 to 7, further comprising, prior to the closing, checking whether the mobile device is in a protection mode, and if yes ensuring that a device tunnel remains active.

9. The method of any one of claims 1 to 8, further comprising, prior to the closing, checking whether the mobile device is in a phone experience mode, and if yes initializing a set of tunnels that should be active to include a single tunnel.

10. The method of claim 9, wherein the single tunnel is a device tunnel if the device tunnel is required, or tunnel for the foreground application if a device tunnel is not required.

11. A mobile device configured to establish and maintain a high speed tunnel is open to a network, the mobile device comprising:
a communications subsystem; and
a processor, the mobile device being configured to perform the method of any one of claims 1 to 10.

12. A computer readable storage medium storing programming instructions executable on a processor of a mobile computing device, said programming instructions causing said mobile device to carry out the method of any one of claims 1 to 10.

## Amended claims

### Amended claims in accordance with Rule 137(2) EPC.

**1.** A method for establishing and maintaining a high speed tunnel between a mobile device and a network, the method comprising:
determining whether a foreground application on the mobile device requires the high speed tunnel, and
if the foreground application requires the high speed tunnel, closing all tunnels from the mobile device to a network except the tunnel for the foreground application.

**2.** The method of claim 1, wherein the tunnel is associated with a packet data protocol context.

**3.** The method of claim 2, wherein the packet data protocol context is associated with a radio access bearer.

**4.** The method of claim 3, wherein the high speed tunnel utilizes high speed downlink packet access.

**5.** The method of any one of claims 1 to 4, wherein the closing all tunnels utilizes a tunnel prioritization process comprising:
forcing a required tunnel count to be set to one;
setting the highest priority tunnel to be a tunnel for the foreground application;
designating a set of tunnels that should be opened to be the highest priority tunnel; and
deactivating tunnels currently active not in the set of tunnels that should be opened.

**6.** The method of any one of claims 1 to 5, further comprising:
determining whether a foreground application has changed;
determining whether the foreground application requires the high speed tunnel;
restoring tunnels closed in the closing step if the foreground application does not require the high speed tunnel.

**7.** The method of claim 6, wherein the restoring comprises:
assigning a required tunnel count to be a minimum of a watermark value and a number or registered tunnels;
designating a set of tunnels that should be opened to a prioritized list of tunnels having a size equal to the required tunnel count;
deactivating tunnels currently active and not in the set of tunnels that should be opened; and
activating tunnels not currently active but in the set of tunnels that should be opened.

**8.** The method of any one of claims 1 to 7, further comprising, if the foreground application requires the high speed tunnel, and prior to the closing, checking whether the mobile device is in a device protection mode, and if yes ensuring that a device tunnel remains active.

**9.** The method of any one of claims 1 to 8, further comprising, if the foreground application requires the high speed tunnel, and prior to the closing, checking whether the mobile device is involved in a circuit-switched call, and if yes initializing a set of tunnels that should be active to include a single tunnel.

**10.** The method of claim 9, wherein the single tunnel is a device tunnel if the device tunnel is required, or tunnel for the foreground application if a device tunnel is not required.

**11.** A mobile device (500) configured to establish and maintain a high speed tunnel with a network (519), the mobile device comprising:
a communications subsystem (511); and
a processor (520),
the mobile device being configured to perform the method of any one of claims 1 to 10.

**12.** A computer readable storage medium storing programming instructions executable on a processor (520) of a mobile computing device (500), said programming instructions causing said mobile computing device to carry out the method of any one of claims 1 to 10.
